## Europäisches Patentamt
## European Patent Office
## Office européen des brevets

(19)

(11) Numéro de publication : **0 149 397 B1**

(12) # FASCICULE DE BREVET EUROPÉEN

(45) Date de publication du fascicule du brevet :
08.07.87

(51) Int. Cl.⁴ : **B 60 H 1/00**, G 05 G 9/08

(21) Numéro de dépôt : 84402732.6

(22) Date de dépôt : 27.12.84

(54) Dispositif de commande simultanée de deux pièces oscillantes telles que des volets d'un ensemble de climatisation de véhicule automobile.

(30) Priorité : 13.01.84 FR 8400531

(43) Date de publication de la demande :
24.07.85 Bulletin 85/30

(45) Mention de la délivrance du brevet :
08.07.87 Bulletin 87/28

(84) Etats contractants désignés :
DE GB IT

(56) Documents cités :
FR-A- 717 023
FR-A- 1 378 533
FR-A- 2 335 753
FR-A- 2 423 815
FR-A- 2 459 511
GB-A- 18 483
GB-A- 502 726
GB-A- 791 662
US-A- 2 634 670
PRODUCT ENGINEERING, vol. 20, no. 4, avril 1949, pages 120,121, New York, US; E. RAHN: "Modifications and uses for basic of cams"
PATENTS ABSTRACTS OF JAPAN, vol. 6, no. 10 (M-107)[888], 21 janvier 1982

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Bach, Patrick**
**50 Rue Nicolas Ledoux**
**F-78190 Voisins Le Bretonneux (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention a pour objet un dispositif permettant d'actionner simultanément, au moyen d'un bouton rotatif de commande, deux pièces oscillantes telles que des volets d'un ensemble de climatisation de véhicule automobile.

Une disposition simple connue (US-A-2 634 670) comporte à cet effet une platine solidaire du bouton et munie de deux lumières formant cames et coopérant avec des doigts respectivement liés à chacune des deux pièces oscillantes.

D'autre part, on connaît, par exemple par le FR-A-717 023, des dispositifs permettant d'actionner au moins un organe à partir d'au moins un élément coopérant avec une came formée d'une gorge en boucle fermée pratiquée dans une platine susceptible de tourner toujours dans le même sens.

L'invention vise à perfectionner les dispositifs de ce type, tout en conservant leur simplicité, en leur donnant la capacité de placer les deux pièces oscillantes dans un grand nombre de positions relatives, et en particulier, lorsqu'il s'agit de deux volets, d'ouvrir plus ou poins l'un quelconque de ceux-ci quand l'autre est soit ouvert au maximum, soit fermé.

Le dispositif de commande visé par l'invention comporte une platine rotative solidaire d'un bouton de commande, dans laquelle est agencée une came coopérant avec un doigt relié à l'une des deux pièces oscillantes à entraîner, chaque levier portant un doigt qui coopère avec une came constituée par une gorge agencée dans la platine, (US-A-2 634 670).

Suivant l'invention, les deux doigts coopérant avec une même gorge dont le cheminement forme une boucle fermée, les deux leviers sont montés pivotants autour du même axe disposé de manière que les deux doigts soient mobiles respectivement à proximité de deux plans passant par l'axe de rotation de la platine.

Selon quelques caractéristiques avantageuses de l'invention :

l'axe est constitué par un tourillon saillant de l'un des leviers et traversant l'autre levier et une partie fixe du dispositif, ce tourillon étant fendu axialement et maintenu en place par déformation élastique ;

les deux plans précités sont perpendiculaires et deux portions opposées de la gorge sont circulaires, formant deux arcs de cercles de rayons différents et centrés sur l'axe de rotation de la platine, ces arcs s'étendant sensiblement chacun sur un angle de 90° environ ;

les pièces oscillantes étant des volets, leur liaison au levier associé est telle que chaque volet est ouvert au maximum ou fermé selon que le doigt du levier associé se trouve dans l'une ou l'autre des deux portions circulaires de la gorge ;

une tige ou un câble étant accroché à l'extrémité libre de chacun des deux leviers pour le relier à la pièce oscillante associée, l'un au moins des leviers est coudé de manière que les extrémités libres des deux leviers soient proches l'une de l'autre et que leurs parcours soient sensiblement superposés ;

chaque doigt porte un galet, de préférence sphérique.

Un exemple de réalisation d'un dispositif de double commande selon l'invention est décrit ci-après, en référence aux dessins annexés parmi lesquels :

la Figure 1 est une vue frontale partielle simplifiée du dispositif associé à des volets ;

la Figure 2 est une vue en coupe axiale suivant la ligne brisée II-II de la Figure 1 ;

et la Figure 3 est une vue partielle analogue à la Figure 1 d'un mode de réalisation particulier du dispositif.

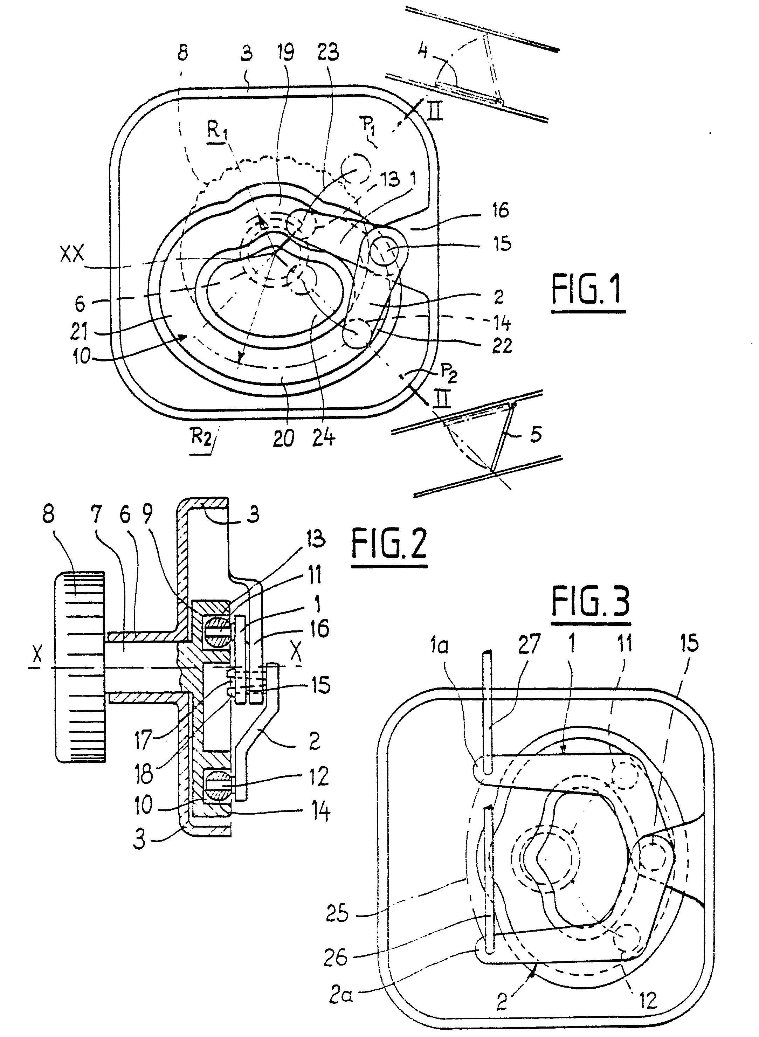

On voit sur la Figure 1 deux leviers 1, 2 qui pivotent sur un support fixe 3 et qui sont respectivement reliés, par leur extrémité libre, à deux volets 4, 5 propres à obturer ou non chacun une canalisation, par exemple d'un ensemble de climatisation de véhicule.

Le support 3 comporte une saillie tubulaire 6 dans laquelle est emmanché un axe 7 solidaire d'un côté d'un bouton de commande 8, et de l'autre côté d'une platine 9 de forme générale ovale. Dans la face de cette platine 9 tournée du côté opposé au bouton 8, est agencée une gorge 10 dont le cheminement forme une boucle fermée.

Dans la gorge 10 sont engagés deux doigts 11, 12 respectivement solidaires de chacun des leviers 1, 2 au droit de leur extrémité libre. Chaque doigt 11, 12 porte un galet 13, 14 partiellement sphérique de diamètre légèrement inférieur à la largeur constante de la gorge 10.

L'axe de pivotement des deux leviers 1, 2 est parallèle à l'axe 7 et matérialisé par un tourillon 15 saillant du levier 2 et traversant l'autre levier 1 et une patte 16 du support 3 par des trous appropriés. Le tourillon 15 comporte une fente axiale 17 séparant deux parties de ce tourillon qui peuvent se rapprocher légèrement par déformation élastique lors de leur introduction dans lesdits trous, et qui comportent chacun un épaulement 18 maintenant axialement le tourillon 15 dans ces trous.

La gorge 10 comprend deux portions opposées 19, 20 dont la ligne médiane forme des arcs de cercles de rayons respectifs R1 et R2, centrés sur l'axe XX de rotation de la platine 9, chacun de ces arcs s'étendant sur un angle de 90° environ.

Ces deux portions circulaires sont reliées par des portions intermédiaires courbes 21, 22 dont les flancs forment cames pour les galets 13, 14. La liaison entre chaque levier 1, 2 et le volet associé 4, 5 est telle que quand un doigt 11, 12 se trouve dans la portion 19 de la gorge 10, le volet associé (4, 5) est ouvert au maximum, et quand le doigt se trouve dans la portion 20, le volet est fermé.

La longueur des leviers 1, 2 et la position de leur axe 15 sont telles que les arcs 23, 24 parcourus par le centre des doigts 11, 12 sont respectivement voisins de deux plans perpendiculaires P1, P2 passant par l'axe de rotation X-X de la platine 9 et du bouton 8, ces deux plans étant ceux définissant la coupe II-II.

Dans le mode de réalisation de la Figure 3, l'extrémité libre 1a, 2a de chaque levier 1, 2 est nettement plus éloignée de l'axe de pivotement 15 que le doigt correspondant 11, 12. Les leviers 1, 2 sont coudés de manière que les deux extrémités 1a, 2a soient proches et que leurs parcours en arc de cercle 25 soient sensiblement superposés, c'est-à-dire identiques dans deux plans parallèles voisins. En variante, un seul des deux leviers pourrait être coudé de manière à obtenir la même proximité entre les deux extrémités libres des leviers 1, 2.

Des câbles ou des tiges 26, 27 sont respectivement accrochés à chacune de ces extrémités 1a, 2a pour assurer la liaison entre chaque levier 1, 2 et le doigt associé 4, 5. Ces deux câbles ou tiges 26, 27 sont sensiblement parallèles et orientés dans un même sens.

La rotation de la platine 9, provoquée en faisant tourner le bouton 8 dans un sens ou dans l'autre, entraîne des déplacements des doigts 11, 12 suivant les arcs de cercle 23, 24, par coopération des galets correspondants 13, 14 avec la gorge 10 dont les flancs se comportent comme des cames.

Dans la position représentée à la Figure 1, les doigts 11 et 12 étant respectivement situés à la limite des portions circulaires 19 et 20 de la gorge, le volet 4 est ouvert au maximum et le volet 5 est fermé.

En faisant tourner la platine 9 dans le sens des aiguilles d'une montre selon la Figure 1,
— dans un premier quart de tour, le doigt 11 restant dans la portion circulaire 19 et le doigt 12 glissant dans la portion intermédiaire 22, le volet 4 reste grand ouvert tandis que le volet 5 prend successivement toutes les positions entre celle où il est fermé et celle où il est grand ouvert ;
— dans le quart de tour suivant, le doigt 11 glissant dans la portion intermédiaire 21 et le doigt 12 restant dans la portion circulaire 19, le volet 4 prend successivement toutes les positions entre celle où il est grand ouvert et celle où il est fermé, tandis que le volet 5 reste grand ouvert ;
— dans le quart de tour suivant, les doigts 11 et 12 glissant respectivement dans la portion circulaire 20 et dans la portion intermédiaire 21, le volet 4 reste fermé et le volet 5 prend successivement toutes les positions depuis celle où il est grand ouvert jusqu'à celle où il est fermé ;
— dans le dernier quart de tour, les doigts 11 et 12 glissant respectivement dans les portions 22 et 20 de la gorge 10, le volet 4 prend toutes ses positions depuis celle où il est fermé jusqu'à celle où il est grand ouvert, tandis que le volet 5 reste fermé.

On voit que la rotation du bouton 8, donc de la platine 9, peut s'effectuer toujours dans le même sens ou alternativement dans un sens et dans l'autre.

Le dispositif décrit permet ainsi de placer les deux volets dans un grand nombre de positions relatives, extrêmes ou intermédiaires, et de passer d'une position choisie à une autre en tournant le bouton dans le sens convenable d'un demi-tour au plus. Le dispositif est en outre de réalisation simple et peu encombrant, notamment dans le cas de la Figure 3 où les câbles ou tiges de liaison 26, 27 sont juxtaposés.

En variante, les moyens reliant les leviers 1, 2 aux volets 4, 5 sont tels qu'au moins l'un de ceux-ci est ouvert au maximum quand le doigt du levier associé est dans la portion circulaire 20 de la gorge 10 et fermé quand ce doigt est dans l'autre portion circulaire 19.

## Revendications

1. Dispositif de commande simultanée de deux pièces oscillantes telles que des volets (4, 5) d'un ensemble de climatisation de véhicule automobile, comportant une platine rotative (9) solidaire d'un bouton (8) de commande, deux leviers (1, 2) qui peuvent pivoter chacun autour d'un axe (15) parallèle à l'axe (X-X) de rotation de la platine (9) et qui sont chacun reliés à l'une des deux pièces oscillantes (4, 5), chaque levier (1, 2) portant un doigt (11, 12) qui coopère avec une came constituée par une gorge (10) agencée dans la platine (9), caractérisé en ce que les deux doigts (11, 12) coopérant avec une même gorge (10) dont le cheminement forme une boucle fermée, les deux leviers (1, 2) sont montés pivotants autour du même axe (15) disposé de manière que les deux doigts (11, 12) soient mobiles respectivement à proximité de deux plans (P1, P2) passant par l'axe (X-X) de rotation de la platine (9).

2. Dispositif selon la revendication 1, caractérisé en ce que les deux susdits plans (P1, P2) sont perpendiculaires, et deux portions opposées (19, 20) de la gorge (10) sont circulaires, formant deux arcs de cercle de rayons différents (R1, R2) et centrés sur l'axe de rotation (X-X) de la platine (9), ces arcs s'étendant chacun sur un angle de 90° environ.

3. Dispositif selon l'une des revendications 1 ou 2, caractérisé en ce que l'axe (15) est constitué par un tourillon (15) saillant de l'un (2) des leviers et traversant le second levier (1) ainsi qu'une partie fixe (16) du dispositif, ce tourillon (15) étant fendu axialement et maintenu en place par déformation élastique.

4. Dispositif selon l'une des revendications 1 à 3 caractérisé en ce qu'une tige ou un câble (26, 27) étant accroché à l'extrémité libre (1a, 2a) de chacun des deux leviers pour le relier à la pièce oscillante associée (4, 5), l'un au moins des leviers (1, 2) est coudé de manière que les extrémités libres (1a, 2a) de ces leviers soient proches l'une de l'autre et que leurs parcours soient sensiblement superposés.

5. Dispositif selon l'une des revendications 1 à 4, caractérisé en ce que chaque doigt (11, 12) porte un galet (13, 14), de préférence sphérique, agencé pour rouler dans la gorge (10).

### Claims

1. A device for simultaneously controlling two oscillating elements such as flaps (4, 5) of an air conditioning unit of an automobile vehicle, comprising a rotary plate (9) integral with a control knob (8), two levers (1, 2) which are each pivotable about a shaft (15) parallel to the axis (X-X) of rotation of the plate (9) and which are each connected to one of the two oscillating elements (4, 5), each lever (1, 2) carrying a pin (11, 12) which cooperates with a cam constituted by a groove (10) arranged in the plate (9), characterised in that the two pins (11, 12) cooperate with the same groove (10), the path of which constitutes a closed loop, the two levers (1, 2) are pivotally mounted on the same shaft (15) disposed in such manner that the two pins (11, 12) are respectively movable in vicinity of two planes (P1, P2) passing through the axis (X-X) of rotation of the plate (9).

2. A device according to claim 1, characterised in that said two planes (P1, P2) are perpendicular and two opposed portions (19, 20) of the groove (10) are circular, forming two arcs of a circle having different radii (R1, R2) and centered on the axis (X-X) of rotation of the plate (9), these arcs each angularly extending through about 90°.

3. A device according to one of the claims 1 and 2, characterised in that the shaft (15) is constituted by a journal (15) projecting from one (2) of the levers and extending through the second lever (1) and a fixed part (16) of the device, this journal (15) being axially split and held in position by elastic deformation.

4. A device according to one of the claims 1 to 3, characterised in that a rod or a cable (26, 27) is hooked to the free end (1a, 2a) of each of the two levers for connecting to the associated oscillating element (4, 5), at least one of the levers (1, 2) is cranked in such manner that the free ends (1a, 2a) of these levers are close to each other and their paths are substantially superimposed.

5. A device according to one of the claims 1 to 4, characterised in that each pin (11, 12) carries a preferably spherical roller (13, 14) arranged to roll in the groove (10).

### Patentansprüche

1. Vorrichtung zur gleichzeitigen Bedienung von zwei Schwenkelementen, wie den Klappen (4, 5) einer Klimaanlage für Kraftfahrzeuge, die eine mit einem Bedienungsknopf (8) fest verbundene drehbare Scheibe (9) und zwei Hebel (1, 2) aufweist, von denen jeder um eine zur Drehachse (X-X) der Platte (9) parallele Achse (15) schwenken kann und jeder mit einem der beiden Schwenkelemente (4, 5) verbunden ist, wobei jeder Hebel (1, 2) einen Finger (11, 12) trägt, der mit einer durch eine in der Scheibe (9) ausgebildete Kehle (10) gebildete Kurve zusammenwirkt, dadurch gekennzeichnet, daß die beiden Finger (11, 12) mit der gleichen Kehle (10) zusammenwirken, deren Verlauf eine geschlossene Schleife bildet, wobei die beiden Hebel (1, 2) um die gleiche Achse (15) schwenkend angebracht sind, die so angeordnet ist, daß die beiden Finder (11, 12) jeweils in der Nähe zweier Ebenen (P1, P2) beweglich sind, die durch die Drehachse (X-X) der Scheibe (9) verlaufen.

2. Vorrichtung nach Anspruch 1, dadurch gekennzeichnet, daß die beiden Ebenen (P1, P2) aufeinander senkrecht stehen, und daß zwei gegenüberliegende Abschnitte (19, 20) der Kehle (10) kreisförmig sind und dabei zwei verschiedene Radien (R1, R2) aufweisende und auf die Drehachse (X-X) der Scheibe (9) zentrierte Kreisbögen ausbilden, wobei diese Bögen sich jeweils über einen Winkel von ungefähr 90° erstrecken.

3. Vorrichtung nach einem der Ansprüche 1 und 2, dadurch gekennzeichnet, daß die Achse (15) durch einen Lagerzapfen (15) gebildet ist, der von dem einen (2) der Hebel abragt und den zweiten Hebel (1) sowie ein feststehendes Teil (16) der Vorrichtung durchsetzt, wobei dieser Lagerzapfen (15) axial geschlitzt ist und durch elastische Verformung in Stellung gehalten wird.

4. Vorrichtung nach einem der Ansprüche 1 bis 3, dadurch gekennzeichnet, daß eine Stange oder ein Seil (26, 27) am freien Ende (1a, 2a) jedes der beiden Hebel zur Verbindung desselben mit dem zugehörigen Schwenkelement (4, 5) eingehängt ist, wobei wenigstens einer der Hebel (1, 2) so gekrümmt ist, daß die freien Enden (1a, 2a) dieser Hebel nahe beieinander liegen und ihre Bahnen in wesentlichen übereinander liegen.

5. Vorrichtung nach einem der Ansprüche 1 bis 4, dadurch gekennzeichnet, daß jeder Finger (11, 12) eine vorzugsweise sphärische Rolle (13, 14) trägt, die für ein Rollen in der Kehle (10) eingerichtet ist.

FIG.1

FIG.2

FIG.3